# EUROPÄISCHE PATENTANMELDUNG

(11) **EP 0 581 237 A1**
(43) Veröffentlichungstag der Anmeldung: **02.02.1994**
(21) Anmeldenummer: 93111967.1
(22) Anmeldetag: 27.07.1993
(51) Int. Cl.: B60H 3/00

(54) **Vorrichtung zur Klimatisierung von Räumen**

(30) Priorität: 27.07.1992 DE 4224710
(71) Anmelder: STN Systemtechnik Nord GmbH, D-28199 Bremen (DE)
(72) Erfinder: Schütze, Horst, Dipl.-Ing., D-28844 Weyhe (DE); Yost, John, Dipl.-Ing., D-27299 Langwedel (DE)
(74) Vertreter: Eisenführ, Speiser & Partner

(57) **Zusammenfassung**

Vorrichtung zur Klimatisierung von Räumen (1) mit mindestens einem Kompressor (2, 4), einem Zwischenkühler (3, 6), einer nachgeschalteten Expansionsmaschine (5) und einer Mischkammer (9) zum Beimischen rezirkulierter Abluft aus den zu klimatisierenden Räumen (1). Erfindungsgemäß wird der Mischkammer durch einen Zusatzlüfter (11) zusätzlich Außenluft zugeführt, wenn bei Drosselung der durch den Kompressor (2, 4) usw. durchströmenden Luftmenge (Drosselung der Kühlleistung) die den Räumen (1) zugeführte Frischluftmenge aufrechterhalten oder erhöht werden soll.

## Beschreibung

Die Erfindung betrifft eine Vorrichtung zur Klimatisierung von Räumen mit mindestens einem Kompressor zur Verdichtung von Außenluft und mindestens einem Zwischenkühler, mit einer nachgeschalteten Expansionsmaschine, insbesondere Expansionsturbine, zur Rückgewinnung mechanischer Energie und mit einer Mischkammer zum Beimischen rezirkulierter Abluft aus den Räumen zu der den Auslaß der Expansionsmaschine verlassenden Luft, bevor diese den Räumen zugeleitet wird. Die Erfindung ist insbesondere für Aufenthaltsräume für Menschen oder Tiere in Schienenfahrzeugen oder anderen Landfahrzeugen bestimmt, obwohl ein Einsatz auch auf Schiffen oder für den stationären Betrieb möglich ist.

Wie bereits aus dem Aufsatz "Kaltluftkältemaschinen nach dem Joule-Prozeß" in der Zeitschrift Klima-Kälte-Heizung 5/1990, Seiten 206 bis 211, hervorgeht, nimmt im Rahmen der Suche nach alternativen Kältetechnologien zur Substitution von Kaltdampfprozessen mit vollhalogenierten Fluorchlorkohlenwasserstoffen (FCKW) das Interesse am Kaltluftprozeß wegen der Unschädlichkeit des Kältemittels Luft erneut zu. Solche Anlagen sind bisher insbesondere im Bereich der Flugzeugklimatisierung bekannt geworden, wo es vor allem auf geringes Gewicht der Anlage ankommt und Turboverdichter im Strahltriebwerk bereits vorhanden sind.

Außerdem sind bereits Untersuchungen von Kaltluft-Kälteprozessen für den Einsatz in zu klimatisierenden Schienenfahrzeugen, insbesondere Güterwagen bekannt geworden (Wissenschaftliche Zeitschrift der Hochschule für Verkehrswesen "Friedrich List" in Dresden, 27 (1980) Heft 1, Seiten 35 bis 41). Die dort beschriebenen Kaltluftanlagen arbeiten nach einem offenen Prozeß unter Verwendung eines Verdichters, eines Wärmeübertragers, einer Expansionsturbine und einer Mischkammer. Eine ähnliche Vorrichtung ist aus der DE-OS 40 05 698 bekannt. Die Gütegrade solcher Anlagen liegen jedoch deutlich niedriger als bei den bisher mit FCKW arbeitenden Verdampferanlagen, so daß Anlagen nach dem Kaltluftprozeß sich bisher wegen des hohen Leistungsverbrauches nicht durchsetzen konnten.

Schließlich ist es aus dem Buch "Wärmerückgewinnung in raumtechnischen Anlagen", 2. Auflage, Verlag C.F. Müller, Karlsruhe, 1980, S. 97-107, bekannt, in Heizungsanlagen die Abluft von Räumen sowie die zugeführte Zuluft über einen Wärmetauscher zwecks Energierückgewinnung zu leiten.

Der vorliegenden Erfindung liegt die Aufgabe zugrunde, eine Vorrichtung zur Klimatisierung von Räumen vorzuschlagen, bei der Gütegrad bzw. Wirkungsgrad dermaßen erhöht wird, daß sich die Werte der Gesamtanlage denen von Verdampferanlagen nähern.

Diese Aufgabe wird bei einer Vorrichtung der eingangs genannten Art dadurch gelöst, daß die durch den Kompressor, Zwischenkühler und die Expansionsmaschine geführte Luftmenge für eine optimale Kälteleistung bemessen ist, und daß der Mischkammer durch einen Zusatzlüfter bei Bedarf zusätzlich Außenluft zugeführt wird.

Durch diese Maßnahme werden dadurch Verbesserungen möglich, weil der Kompressor und der Luftaufbereitungsanteil der Anlage für Kälteleistung optimiert werden können, ohne daß durch einen erhöhten Luftdurchsatz durch den Kompressor entsprechend dem gewünschten Frischluftanteil im Verhältnis zur rezirkulierten Luft diese optimale Einstellung gestört werden müßte. Mit anderen Worten: Wenn die Anlage bei voller Kühlleistung über den Kompressor den erforderlichen Frischluftanteil im Verhältnis der rezirkulierten Luft in den zu klimatisierenden Räumen bereitstellt, kann bei einer Drosselung der Kühlleistung, z.B. bei höherer Außentemperatur, die Anlage mit gutem Wirkungsgrad weiterbetrieben werden, weil dann zusätzliche Frischluft über den Zusatzlüfter zugeführt werden kann.

Eine weitere Verbesserung des Gesamtwirkungsgrades kann dadurch erreicht werden, daß die zusätzliche Außenluft über einen ersten Wärmetauscher zugeführt wird, durch den die Außenluft mittels Abluft aus den Räumen je nach Betriebszustand der Vorrichtung vorgekühlt (bei Kühlbetrieb) oder vorgewärmt (bei Heizbetrieb) wird. Hierdurch wird die mittels des Zusatzlüfters eingeführte Zusatzluft in dem ersten Wärmetauscher durch Abluft aus den zu klimatisierenden Räumen vorgekühlt, so daß sich der durch die Optimierung der Vorrichtung schon günstige Wirkungsgrad der Gesamtanlage noch weiter erhöht.

Obwohl die bei der Vorrichtung vorgesehene Expansionsmaschine auch zum mechanischen Antrieb anderer Einrichtungen, z.B. von Lüftern, verwendet werden kann, ist eine besonders vorteilhafte Vorrichtung dadurch gekennzeichnet, daß ein erster Kompressor zur Vorverdichtung der Außenluft und ein zweiter Kompressor zur weiteren Verdichtung sowie zwischengeschaltete Wärmetauscher zur Zwischenkühlung vorgesehen sind, und daß der zweite Kompressor durch die Expansionsmaschine angetrieben wird.

Um eine Entfeuchtung der zugeführten Außenluft sowie eine Vereisung aufgrund der niedrigen Temperaturen am Auslaß der Expansionsmaschine zu verhindern, ist zweckmäßigerweise der Expansionsmaschine ein Kondensations-Wärmetauscher vorgeschaltet, der Kondensationswasser abscheidet. Der Kondensations-Wärmetauscher wird hierbei mit der expandierten Luft aus der Expansionsmaschine beschickt.

Das im Kondensations-Wärmetauscher im Abscheider anfallende Kondensationswasser kann vorzugsweise zur Verbesserung des Wirkungsgrades herangezogen werden, indem es in die dem ersten Wärmetauscher zugeführte Abluft eingespritzt wird. Eine Einspritzung von Kondensationswasser kann auch in den dem zweiten Kompressor nachgeschalteten Wärmetauscher erfolgen, wenn dieser mittels zugeführter Außenluft gekühlt wird. Der Wärmetauscher ist zweckmäßigerweise in zwei Abschnitte unterteilt, die nacheinander von derverdichteten Luft durchströmt werden. In die dem zweiten (kälteren) Abschnitt des Wärmetauschers zugeführten Außenluft wird dann Kondensationswasser (oder Fremdwasser) eingespritzt.

Für den Fall, daß kein Kondensations-Wärmetauscher vorhanden ist oder aufgrund zu trockener Außenluft kaum Kondensationswasser abgeschieden wird, ist es auch möglich, Fremdwasser einzuspritzen.

Die über den ersten Wärmetauscher geführte Abluft (zum Vorkühlen der über den Zusatzlüfter zugeführten Frischluft) hat noch eine so niedrige Temperatur, daß sie anschließend über einen zweiten Wärmetauscher zwecks Zwischenkühlung der durch den ersten Kompressor vorverdichteten Luft geführt werden kann.

Auch wenn die aufbereitete Luft bereits vor dem Entspannen entfeuchtet wird, so ist es dennoch möglich, daß in den zu klimatisierenden Räumen, z.B. aufgrund vieler anwesender Personen, die Luft zu feucht wird. Aus diesem Grunde ist gemäß einer vorteilhaften Ausgestaltung der Erfindung vorgesehen, daß die rezirkulierende Abluft aus den Räumen der Mischkammer zur Entfeuchtung über einen (weiteren) Kondensations-Wärmetauscher zugeführt wird, der mit der aufbereiteten Luft aus der Expansionsmaschine beschickt wird, wobei in einem Abscheider Kondensationswasser abgeschieden wird.

Da dennoch bei bestimmten Zuständen der Vorrichtung aufgrund niedriger Temperaturen am Auslaß der Expansionsmaschine, und insbesondere im Kondensations-Wärmetauscher, Vereisungen vorkommen können, wird am Auslaß der Expansionsmaschine gemäß einer vorteilhaften Ausgestaltung der Erfindung rezirkulierende Abluft aus den Räumen beigemischt, um Vereisungen zu vermeiden.

Für den Fall, daß die Außenluft eine niedrigere Temperatur als die Luft in den zu klimatisierten Räumen hat, kann gemäß einer vorteilhaften Ausgestaltung der Erfindung bei Heizbetrieb vorverdichtete und damit erwärmte Außenluft vom Auslaß des ersten Kompressors in die Mischkammer über ein Temperaturregelventil eingeleitet werden.

Die erfindungsgemäße Vorrichtung läßt es auf einfache Weise zu, in der Außenluft plötzlich kurzzeitig oder über längere Zeiträume auftretende Überdrücke von den zu klimatisierenden Räumen fernzuhalten. Dies erfolgt dadurch, daß mindestens einige der mit der Außenluft in Verbindung stehenden Zuflüsse und Abflüsse der zu klimatisierenden Räume über Druckschutzventile während auftretenden Überdruckes in der Außenluft teilweise oder ganz verschließbar sind. Dies ist insbesondere bei der Anwendung der erfindungsgemäßen Vorrichtung für die Klimatisierung von Eisenbahnzügen bei der Durchfahrt von Tunneln wichtig.

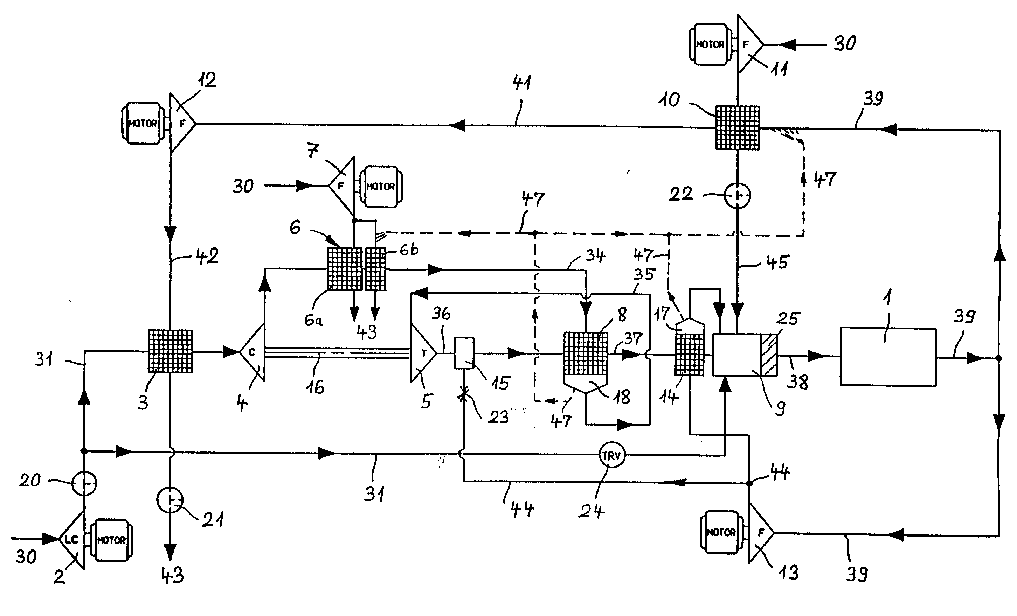

Die Erfindung wird nachfolgend anhand eines Ausführungsbeispiels unter Bezug auf die beigefügte Zeichnung näher erläutert. Die Zeichnung zeigt ein Prinzipdiagramm einer Vorrichtung zur Klimatisierung von Räumen gemäß der Erfindung.

Es ist ein erster Kompressor 2 vorgesehen, der Außenluft 30 vorverdichtet und über eine Leitung 31 sowie einen Wärmetauscher 3 zwecks Zwischenkühlung dem Einlaß eines zweiten Kompressors 4 zuleitet. In diesem zweiten Kompressor 4, der über eine Welle 16 von einer Expansionsmaschine 5 angetrieben wird, wird die vorverdichtete und zwischengekühlte Umgebungsluft weiter verdichtet und über einen weiteren Wärmetauscher 6 vorgekühlt. Als Kühlmedium für diesen Wärmetauscher 6 dient Außenluft 30, die durch einen Lüfter 7 durch den Wärmetauscher 6 geführt und ins Freie 43 abgelassen wird. Im weiteren Verlauf strömt die vorgekühlte und verdichtete Luft über eine Leitung 34, einen Kondensations-Wärmetauscher 8 und eine Leitung 35 zum Einlaß der Expansionsmaschine 5 und verläßt diese über einen Auslaß 36 mit einem Druck, der im vorliegenden Fall geringfügig über dem Umgebungsdruck liegt. Die Temperatur der den Auslaß 36 verlassenden Luft liegt deutlich unter 0° C.

Der Kondensations-Wärmetauscher 8 dient dazu, die verdichtete und durch den Wärmetauscher 6 vorgekühlte Luft zu entfeuchten, was durch die vom Auslaß 36 der Expansionsmaschine 5 kommende kalte Luft erfolgt. In einem Abscheider 18 des Kondensations-Wärmetauschers 8 wird Kondensationswasser (gestrichelte Linie 47) abgeschieden. Die im Kondensations-Wärmetauscher 8 gekühlte und entfeuchtete Luft gelangt über die Leitung 35 zum Einlaß der Expansionsmaschine 5.

Die Temperatur der im Kondensations-Wärmetauscher 8 erwärmten Luft liegt immer noch erheblich unter der Umgebungstemperatur und gelangt als aufbereitete (gekühlte und entfeuchtete) Luft über eine Leitung 37 sowie über einen weiteren Kondensations-Wärmetauscher 14 in eine Mischkammer 9. In dieser Mischkammer 9 wird der über die Leitung 37 zugeführten Luft einerseits Rezirkulationsluft (Leitung 39) von den zu klimatisierenden Räumen 1 über einen Lüfter 13, und andererseits Außenluft (Frischluft) 30 über einen Zusatzlüfter 11 und einen Wärmetauscher 10 sowie über eine Leitung 45 zugeleitet. Der Wärmetauscher 10 erfüllt eine Doppelfunktion. Bei Wetterbedingungen, bei denen die Außentemperatur höher als die Temperatur des zu klimatisierenden Raumes 1 liegt, wirkt er als Vorkühler für die Frischluft, während bei niedrigeren Außentemperaturen, also im Heizfall, der Wärmeaustauscher 10 zur Vorwärmung dient. Die in der Mischkammer 9 gemischte Luft gelangt dann über einen Filter 25 und eine Leitung 38 in die zu klimatisierenden Räume 1.

Es ist auch möglich, den Wärmetauscher 10 fortzulassen und die zusätzliche Außenluft (Frischluft) 30 direkt in die Mischkammer 9 einzuführen. In diesem Fall ist zwar der Gesamtwirkungsgrad bei großen Temperaturunterschieden zwischen Außenluft und Raumluft geringer, jedoch bleibt der Vorteil, daß bei Drosselung der Kälteleistung (Luftdurchsatz der Kompressoren 2 und 4) die notwendige zusätzliche Frischluft über den Lüfter 11 zugeführt werden kann. Bei geringeren Temperaturunterschieden zwischen Außenluft und Raumluft ist der Wirkungsgradverlust wegen fehlender Energierückgewinnung jedoch nicht so hoch.

Die durch die Leitung 39 der zu klimatisierenden Räume 1 austretende Abluft wird nicht nur zur Mischkammer 9 rezirkuliert, sondern gelangt auch über den Wärmetauscher 10 (oder direkt), eine Leitung 41, einen Lüfter 12, eine Leitung 42 und über den Wärmetauscher 3 ins Freie 43. Die Abluft bewirkt also gegebenenfalls eine Vorkühlung der über den Wärmetauscher 10 geführten Außenluft 30, die der Mischkammer 9 als Frischluft zugeleitet wird und darüber hinaus ist die über die Leitung 41 dem Wärmetauscher 3 zugeführte Abluft jedoch so kalt, daß die mittels des ersten Kompressors 2 vorverdichtete Luft (Leitung 31) intensiver zwischengekühlt werden kann, als wenn hierzu nur Außenluft verwendet würde. Durch diese doppelte Ausnutzung der Abluft (Leitung 39) in den Wärmetauschern 10 und 3 wird der Wirkungsgrad der Vorrichtung deutlich erhöht.

Der zwischen Leitung 37 und der Mischkammer 9 eingefügte Kondensations-Wärmetauscher 14 mit einem Abscheider 17 dient dazu, die rezirkulierende Abluft (Leitung 39) zu entfeuchten, was insbesondere beim Aufenthalt vieler Personen in den zu klimatisierenden Räumen 1 erforderlich werden kann. Die Entfeuchtung in dem Kondensations-Wärmetauscher 8 mit Abscheider 18 reicht hier möglicherweise nicht aus. In dem Abscheider 17 fällt nun weiteres Kondensationswasser an, das in ein gemeinsames Leitungssystem (gestrichelte Leitung 47) gespeist wird.

Das in den Kondensations-Wärmetauschern 8 und 14 anfallende Kondensationswasser (Leitung 47) kann nun benutzt werden, um den Wirkungsgrad der Anlage weiter zu erhöhen. Wie der gestrichelte Verlauf der Leitung 47 zeigt, wird zum einen in die Abluft zum Wärmetauscher 10 führende Leitung 39 Kondensationswasser eingespritzt, da die relative Luftfeuchte der vom Raum 1 kommenden Abluft normalerweise bei ca. 50 % RLF liegt. Die Luftfeuchte der dem Wärmetauscher zugeführten Abluft kann jedoch bis auf 100 % erhöht werden, so daß durch die Verdunstung eine wesentlich intensivere Kühlung im Wärmetauscher 10 erfolgt. Zum zweiten kann Kondensationswasser auf geeignete Weise in den Wärmetauscher 6 eingespritzt werden, um eine wirkungsvollere Vorkühlung der verdichteten Luft zu bewirken. Um eine besonders gute Wirkung zu erzielen, ist der Wärmetauscher 6 in zwei Abschnitte 6a und 6b unterteilt, die bezüglich der komprimierten Luft hintereinander geschaltet sind. Beiden Abschnitten 6a und 6b wird parallel Außenluft 30 über den Lüfter 7 zugeführt. Im kälteren Abschnitt 6b des Wärmetauschers 6 wird der zugeführten Außenluft Kondensationswasser (Leitung 47) durch Einspritzen zugeführt, um die Kühlwirkung deutlich zu verbessern.

Für den Fall, daß kein oder nur wenig Kondensationswasser anfällt, ist es auch möglich, an den angegebenen Stellen Fremdwasser einzuspritzen, um eine zusätzliche Kühlwirkung zu erzielen.

Wird die Vorrichtung z.B. für die Klimatisierung von Eisenbahn-Reisezügen verwendet, so kann auf einfache Weise ein Druckschutzsystem realisiert werden, das bei Tunnelfahrten oder Zugbegegnungen Druckstöße auf die zu klimatisierenden Räume 1 (Passagierkabinen) fernhält. Im vorliegenden Ausführungsbeispiel sind die Zuflüsse und Abflüsse zu den zu klimatisierenden Räumen 1, nämlich der Zufluß in der Leitung 45 und der Abfluß in der Leitung 42 durch Druckschutzventile 22, 21 geschützt, die teilweise oder ganz verschlossen werden, wenn und so lange Druckschwankungen in der Außenluft auftreten. Auch am Auslaß des ersten Kompressors 2 ist ein Druckschutzventil 20 vorgesehen, das jedoch besonders aufgebaut sein muß, da der Auslaß des Kompressors 2 nicht einfach verschlossen, sondern zweckmäßigerweise ins Freie umgelenkt wird.

Da die niedrigen Temperaturen am Auslaß 36 der Expansionsmaschine 5 zu Vereisungen im nachgeschalteten Kondensations-Wärmetauscher 8 führen können, wird über eine Leitung 44 Abluft aus der Leitung 39 über ein Mengenbegrenzungsventil 23 in eine zusätzliche Mischkammer 15 geleitet, um die vom Auslaß der Expansionsmaschine 5 kommende Luft so weit vorzuwärmen, daß die Vereisungsgefahr beseitigt ist.

Ist die Temperatur der Außenluft 30 niedriger als die Temperatur in den zu klimatisierten Räumen 1, so ist (für den Heizbetrieb) ein Umgehungsweg 46 vom Auslaß des ersten Kompressors 2 zur Mischkammer 9 vorgesehen, um aufgrund der Kompression vorgewärmte Luft unter Umgehung der anderen Baueinheiten zuzuführen. Die Zuführung erfolgt hierbei über ein Temperaturregelventil 24.

Die mit dem Bezugszeichen 5 versehene Expansionsmaschine, die über die Welle 16 den zweiten Kompressor 4 antreibt, ist im vorliegenden Beispiel vorzugsweise eine Expansionsturbine. Es sind jedoch auch Verdrängermaschinen möglich. Denkbar ist auch, mit der Expansionsmaschine 5 nicht den zweiten Kompressor 4 anzutreiben, sondern einige oder mehrere Lüfter. Während im vorliegenden Beispiel die Vorrichtung mit zweistufiger Kompression durch die beiden Kompressoren 2 und 4 arbeitet, ist es selbstverständlich auch möglich, nur einen Kompressor vorzusehen. In einem solchen Fall kann die mechanische Ausgangsleistung der Expansionsmaschine 5 dann entweder zum zusätzlichen Antrieb des einzigen Kompressors mit herangezogen werden, oder er treibt Hilfsaggregate.

## Patentansprüche

1. Vorrichtung zur Klimatisierung von Räumen, insbesondere Aufenthaltsräumen,
mit mindestens einem Kompressor zur Verdichtung von Außenluft und mindestens einem Zwischenkühler, mit einer nachgeschalteten Expansionsmaschine, insbesondere Expansionsturbine, zur Rückgewinnung mechanischer Energie und mit einer Mischkammer zum Beimischen rezirkulierter Abluft aus den Räumen zu der den Auslaß der Expansionsmaschine verlassenden Luft, bevor diese den Räumen zugeleitet wird;
dadurch gekennzeichnet,
daß die durch den Kompressor (2, 4), Zwischenkühler (3, 6) und die Expansionsmaschine (5) geführte Luftmenge für eine optimale Kälteleistung bemessen ist, und
daß der Mischkammer (9) durch einen Zusatzlüfter (11) bei Bedarf zusätzlich Außenluft (30) zugeführt wird.

2. Vorrichtung nach Anspruch 1,
dadurch gekennzeichnet, daß die zusätzliche Außenluft (30) über einen ersten Wärmetauscher (10) zugeführt wird, durch den die Außenluft mittels Abluft (Leitung 39) aus den Räumen (1) je nach Betriebszustand der Vorrichtung (bei Kühlbetrieb) vorgekühlt oder (bei Heizbetrieb) vorgewärmt wird.

3. Vorrichtung nach Anspruch 1 oder 2,
dadurch gekennzeichnet, daß ein erster Kompressor (2) zur Vorverdichtung der Außenluft (30) und ein zweiter Kompressor (4) zur weiteren Verdichtung sowie zwischengeschaltete Wärmetauscher (3, 6) zur Zwischenkühlung vorgesehen sind, und
daß der zweite Kompressor (4) durch die Expansionsmaschine (5) angetrieben wird.

4. Vorrichtung nach einem der Ansprüche 1 bis 3,
gekennzeichnet durch einen der Expansionsmaschine (5) vorgeschalteten Kondensations-Wärmetauscher (8) zur Abscheidung von Kondensationswasser ( Leitung 47), wobei der Kondensations-Wärmetauscher (8) durch die expandierte Luft aus der Expansionsmaschine (5) beschickt wird.

5. Vorrichtung nach einem der Ansprüche 1 bis 4,
dadurch gekennzeichnet, daß in die dem ersten Wärmetauscher (10) zugeführte Abluft (Leitung 39) Kondensationswasser (Leitung 47) und/oder Fremdwasser eingespritzt wird.

6. Vorrichtung nach einem der Ansprüche 3 bis 5,
dadurch gekennzeichnet, daß der dem zweiten Kompressor (4) nachgeschaltete Wärmetauscher (6) in zwei Abschnitte (6a, 6b) unterteilt ist, die nacheinander von der verdichteten Luft durchströmt werden,
daß die Kühlung mittels beiden Abschnitten (6a, 6b) zugeführter Außenluft erfolgt, und
daß in die dem zweiten (kälteren) Abschnitt (6b) des Wärmetauschers (6) zugeführte Außenluft Kondensationswasser (Leitung 47) und/oder Fremdwasser eingespritzt wird.

7. Vorrichtung nach einem der Ansprüche 3 bis 6,
dadurch gekennzeichnet, daß die über den ersten Wärmetauscher (10) geführte Abluft (Leitung 39) anschließend über einen zweiten Wärmetauscher (3) zwecks Zwischenkühlung der durch den ersten Kompressor (2) vorverdichteten Luft (Leitung 31) geführt wird.

8. Vorrichtung nach einem der vorstehenden Ansprüche,
dadurch gekennzeichnet, daß die rezirkulierende Abluft (Leitung 39) aus den Räumen (1) der Mischkammer (9) zur Entfeuchtung über einen Kondensations-Wärmetauscher (14) geführt wird, der mit der aufbereiteten Luft aus der Expansionsmaschine (5) beschickt wird, wobei in einem Abscheider (17) Kondensationswasser (Leitung 47) abgeschieden wird.

9. Vorrichtung nach einem der vorstehenden Ansprüche,
dadurch gekennzeichnet, daß am Auslaß (36) der Expansionsmaschine (5) rezirkulierende Abluft (Leitung 39) aus den Räumen (1) beigemischt wird, um Vereisungen, insbesondere im Kondensations-Wärmetauscher (8), zu vermeiden.

10. Vorrichtung nach einem der vorstehenden Ansprüche,
dadurch gekennzeichnet, daß bei Heizbetrieb vorverdichtete und damit erwärmte Außenluft (Leitung 31) vom Auslaß des ersten Kompressors (2) in die Mischkammer (9) über ein Temperaturregelventil (24) eingeleitet wird.

11. Vorrichtung nach einem der vorstehenden Ansprüche, dadurch gekennzeichnet, daß mindestens einige der mit der Außenluft in Verbindung stehenden Zuflüsse und Abflüsse der zu klimatisierenden Räume (1) über Druckschutzventile (20, 21, 22) während auftretenden Überdruckes in der Außenluft teilweise oder ganz verschließbar sind.
